# EUROPEAN PATENT SPECIFICATION

(11) **EP 0 485 344 B1**
(45) Date of publication and mention of the grant of the patent: **22.11.1995**
(21) Application number: 91830355.3
(22) Date of filing: 27.08.1991
(51) Int. Cl.: B65G 47/51, B65G 47/84, B65G 51/03

(54) **A temporary storage device for containers, suitable in particular for PET or PVC bottles**
Einrichtung zum zeitlichen Speichern für Behälter, insbesondere für Flaschen aus PET oder PVC
Dispositif d'emmagasinage temporaire pour récipients, en particulier pour bouteilles en PET ou PVC

(30) Priority: 08.11.1990 IT 4253890
(43) Date of publication of application: 13.05.1992
(73) Proprietor: PROCOMAC S.p.A., 43038 Sala Baganza (Parma) (IT)
(72) Inventor: Vanneste, Yvon, I-43046 Ozzano Taro (Parma) (IT)
(74) Representative: Lanzoni, Luciano

(56) References cited:
- EP-A- 0 310 102
- EP-A- 0 369 126
- US-A- 4 499 987
- US-A- 4 635 784

## Description

The present invention relates to a device for the temporary storage of containers, and in particular for containers moulded in PET or PVC.

Containers or bottles fashioned in polyethene and polyvinyl chloride are markedly light and instable when empty, especially bottles with petaloid bases.

Accordingly, such plastic bottles are moulded with a strengthening ring or collar around the neck, in such a way as to facilitate handling in conveying systems of the type where the bottles are suspended freely from the neck and propelled in the required direction by forced air.

In one attempt to overcome the lack of stability, bottles have been created with a cup glued to the base, which can be conveyed on belts, or on pierced chains through which a soft suction is generated; such bottles betray the drawback of a somewhat high cost, however.

There is a particular need in bottling plant for flow-compensating or magazine type facilities by means of which to offset short interruptions in the operation of blow-moulding or filling machines.

With the advent of high production blow-moulding equipment, it has become possible to transfer newly fashioned containers direct to a filling machine; thus, the use of intermediate bins and an uprighter is avoided, though a temporary storage facility of some description must be provided to operate during any brief stoppage that may occur occasionally and unforeseeably either at the blow-moulder (which can be forced to pause, for example, due to a shortage of parisons) or at the filler unit (which could be stopped perhaps by a burst bottle or by the absence or defectiveness of a cap).

In the event of the blow-moulding equipment having to pause for want of parisons, normal operation must continue nonetheless for a duration sufficient to discharge the bottles still being formed (some 200 to 250), otherwise the process by which heat is applied to the plastics will be adversely affected.

Accordingly, the provision of a temporary in-line storage facility between the blow-moulding and filling machines, able to accumulate and release a flow of bottles, is of considerable assistance in optimizing production.

In effect, a correctly proportioned in-line storage facility enables the filling machine to continue operation even in the event that the blow-moulding equipment should pause occasionally, and in the event of an interruption at the filling machine, likewise, will enable the blow-moulder to continue operating or at least to complete the production cycle on those bottles already in process.

Considering that 90% of the stoppages affecting these machines are of less than 3 minutes duration, an advantageous device will be one that can ensure continuity in production at either machine for at least three minutes.

Conventional in-line storage devices of this type consist generally in a pneumatic or air conveyor proportionate in length to the number of bottles it is wished to accumulate or release.

Given that a bottling line of the type in question will turn out an average 30,000 bottles per hour, the device will need to accommodate at least 1,500 bottles, and with 1.5 litre bottles measuring some 88mm in diameter, this would signify a conventional air conveyor over 130 metres in length.

The drawbacks inherent in the excessive dimensional proportions of such a system will be clear enough, and these are compounded by high running costs attributable to the enormous waste of installed electrical power needed to operate the numerous fan units required along the length of the conveyor.

A further drawback is that of the need for frequent renewal or replacement of the filters associated with such fan units.

US-A-4 635 784 discloses a storage device according to the preamble of claim 1.

From EP-A-0 310 102 is known a storage process and device in which, in a pneumatic transport system, there is a plurality of fixed channels in which the containers may be shunted by means of an exchanger switch.

This device has excessive dimensional proportions and it is rather complex.

From US-A-4 499 987 is known a storage device for cartons comprising web and rollers conveyors on which the cartons are moved. The cartons can be loaded into and/or unloaded from the storage device by means of lift fingers which can pick up the cartons from the conveyors or can put down the cartons on the conveyors.

This device is good for cartons or boxes but is completely unsuitable for handling bottles or containers by way of a their collar.

The object of the present invention is to overcome the drawbacks mentioned above through the adoption of a device of generous storage capacity, though with notably compact dimensions and running costs much lower than those of air conveyors currently employed for the purpose in question.

A further object of the invention is to provide a temporary storage device that features considerable flexibility in installation and can be modular in construction.

The stated objects are duly realized in a temporary in-line storage device according to the invention, suitable in particular for containers moulded in PET or PVC, characterized by the characterising portion of claim 1.

The invention will now be described in detail, by way of example, with the aid of the accompanying drawings, in which:
- fig 1 shows the temporary storage device in a section disposed transversely to the feed direction of the bottles;
- fig 2 shows the device in plan;
- fig 3 shows a detail of the device viewed in cross section;
- fig 4 shows a detail of the device in longitudinal section;
- fig 5 shows the duct of an air conveyor, partly in longitudinal section;
- figs 6, 7 and 8 illustrate a device by which the bottles are arrested, respectively in longitudinal elevation, in plan and in side elevation;
- figs 9 and 10 show two alternative embodiments of the device.

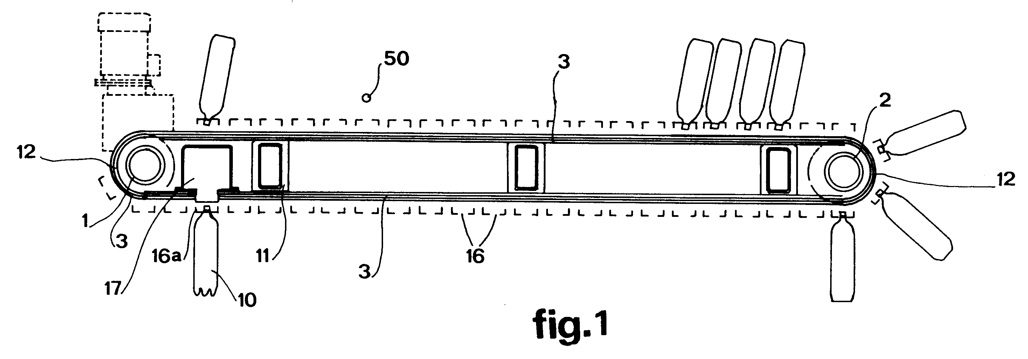

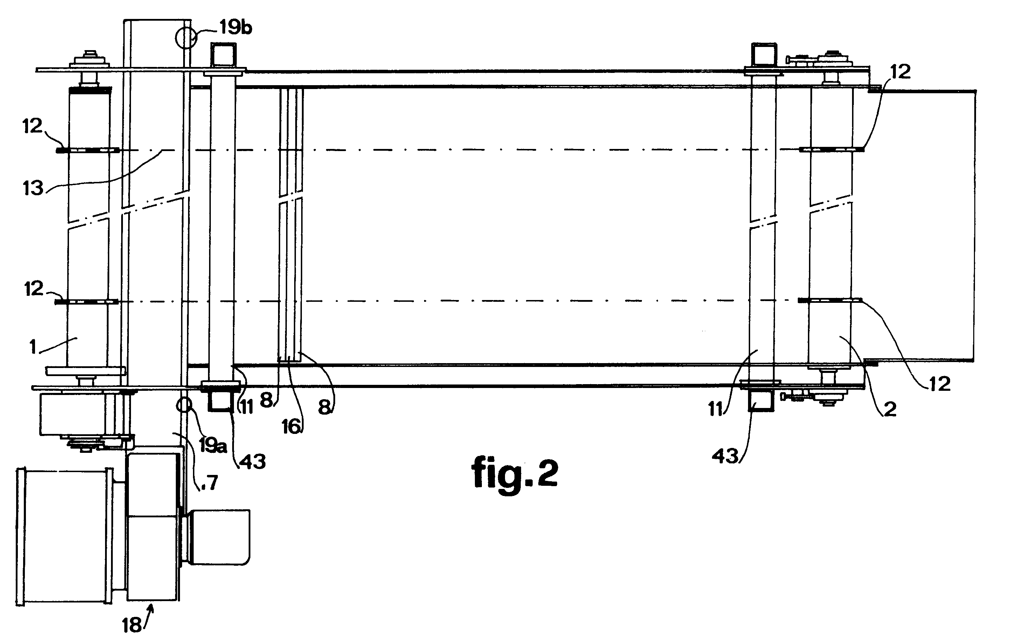

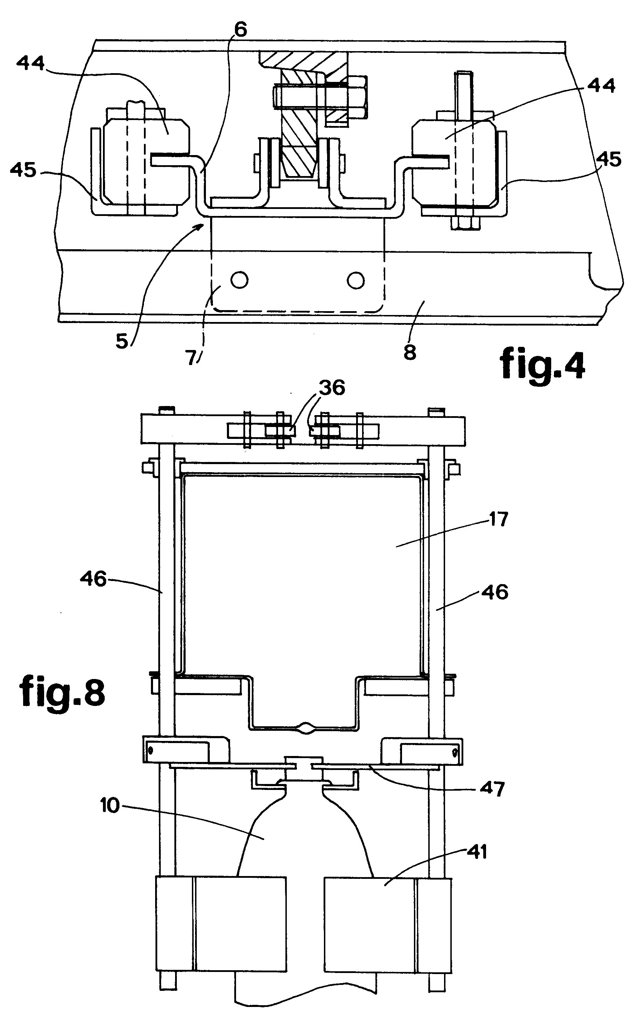

Referring to figs 1, 2, 3 and 4 of the drawings, 1 and 2 denote a pair of tubular shafts, power driven and freely revolving, respectively, each carrying sprockets 12 in mesh with looped chains 3 that are disposed with axes 13 mutually parallel, spaced apart at a distance of one metre or thereabouts and capable of movement in either direction.

Each chain loop 3 carries a plurality of brackets associated one with every third link 14, or in any event at intervals corresponding to a prescribed whole number of links; each bracket, denoted 5 in its entirety, comprises two arms 6 uppermost of 'Z' profile, and two lower arms 7 to which two relative angle members 8 are rigidly attached and arranged in such a way as to afford support to containers or bottles 10 moulded from a plastics material, each suspended from a collar 9 integral with the neck.

The angle members 8 are disposed longitudinally in relation to the feed direction of the containers, extending across the full width of the device, and arranged in a succession of convergent pairs each with the innermost edges set apart at a distance marginally greater (by approximately 1mm) than the diameter of the bottle neck 15 in such a way as to afford a track 16 along which the suspended bottles are freely slidable.

In the example illustrated, the distance between the axes of two successive tracks 16 is equal to the length of three links 14 of the chain 3.

The upper arms 6 of the brackets 5 are slidable in guides 44 (e.g. fashioned in plastic) carried by angle elements 45 secured to longitudinal beams 11 that form part of a frame 43 supporting the device.

The tracks 16 are thus anchored longitudinally to the chains 3 and supported across their width by the guides 44, which extend along the length of the device.

The power driven tubular shaft 1 is invested with intermittent movement by means of a conventional maltese cross mechanism (not illustrated), coupled to a geared motor in such a way that the continuous rotation of the motor is converted into indexed rotation at the shaft 1.

Thus, the assembly of chains 3 and tracks 16 can be invested with a substantially uniform accelerating and decelerating movement and brought to a halt accurately following a step equal to three times the pitch of the chain, such that with each step, each successive track 16 occupies the place vacated by the track preceding, considered in the direction of movement.

16a denotes the track onto or from which a rank of bottles 10 is loaded or unloaded (the track, also, along which bottles pass freely in transit during normal operation).

In effect, loading, unloading and transit can occur only when one track is positioned coaxially beneath the duct 17 of a pneumatic or air conveyor which forms an integral part of the device according to the invention.

The power driven shaft 1 and the freely revolving shaft 2, the chains 3 and the sprockets 12, the brackets 5, upper arms 6 and lower arms 7, angle members 8 and guides 44 together constitute means by which to invest the tracks 16 with movement in the manner described above.

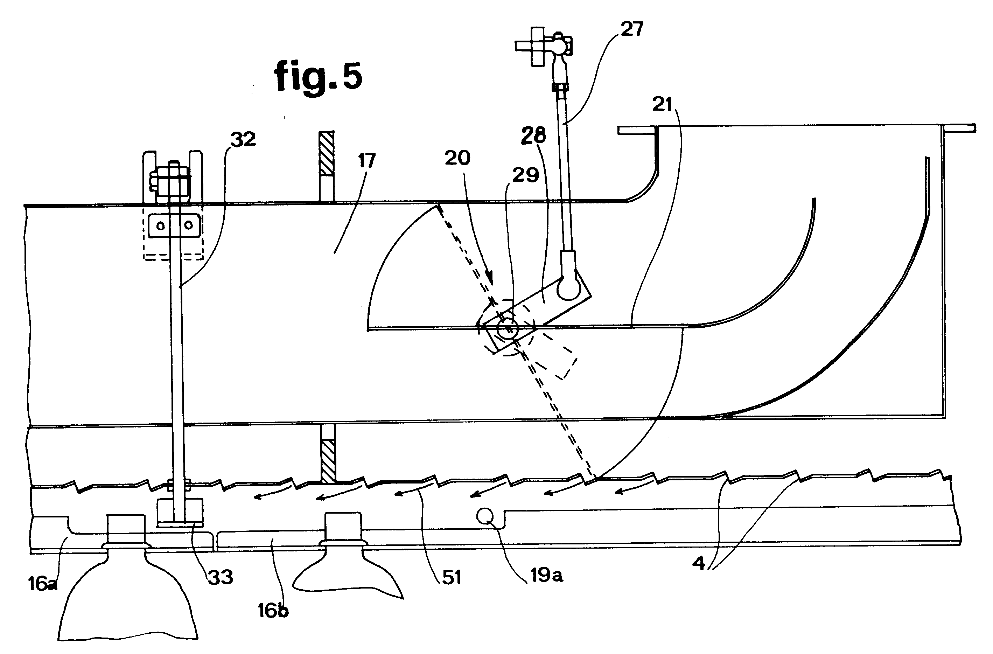

The duct 17 is maintained at pressure marginally greater than atmospheric by a fan unit denoted 18, and affords orifices 4 (see fig 5) from which jets of air are expelled in the direction arrowed 51, in such a way as to impinge on the bottles and bring about their movement along the track 16a.

The length of the duct 17 is such that it projects from either side of the frame 43, the spaces below the projections being occupied by respective fixed tracks 16b similar in profile to the tracks 16 of the device and connecting the track 16a currently beneath the duct with the machines preceding and following.

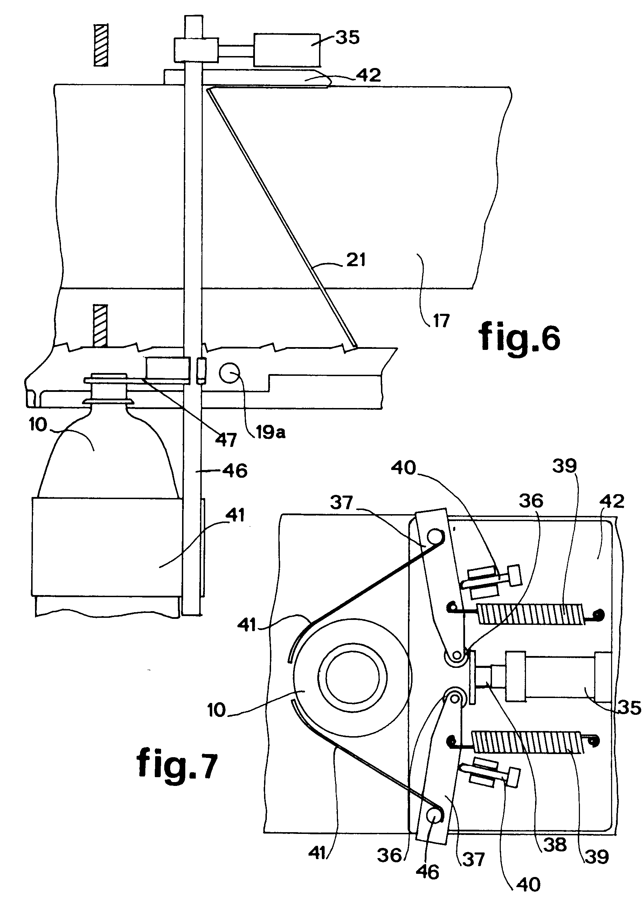

Such an arrangement facilitates connections to the adjoining air conveyors of the production line, as well as affording space in which to accommodate an arrester device illustrated in figs 6, 7 and 8 and in which to install photocells 19 for monitoring the flow of bottles through the device.

20 denotes a butterfly mechanism positioned at a point in the duct 17 immediately downstream of the fan unit 18, by means of which the flow of air within the duct can be shut off with the fan still in operation.

The butterfly mechanism 20 comprises a baffle 21 operated via a mechanical linkage from a cam 22 rigidly associated with the drive shaft 23 of the maltese cross mechanism, in such a way as to close off the duct 17 prior to the indexing movement of the device and thus ensure that the movement of the bottles is not obstructed by the air jets as the tracks 16 change position.

With the tracks 16 at standstill, conversely, the baffle 21 is disposed along the axis of the duct 17 to admit the flow of forced air, and the track 16a beneath the duct faultlessly aligned with the fixed tracks 16b on either side to allow transit of the bottles.

The mechanical linkage connecting the baffle 21 to the cam 22 comprises a following roller 24, carried by a rocker arm 25 and biased toward the cam 22 by a spring (not shown), a fulcrum pivot 26 carrying the rocker arm 25, and a connecting rod 27 through which the rocker arm 25 is associated with a lever 28 connected to a rotatable shaft 29 supporting the baffle 21.

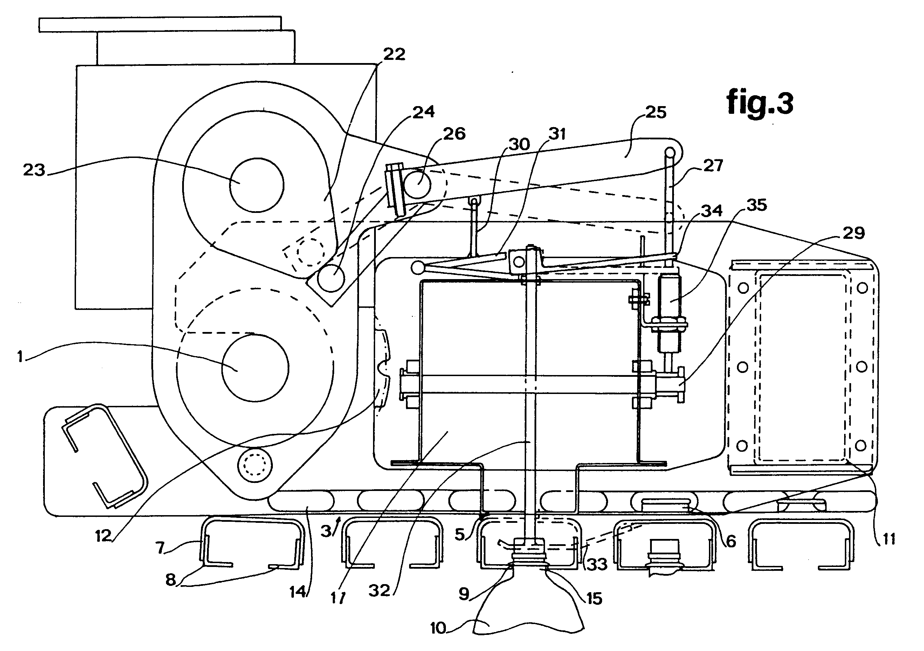

Also associated with one member of the same rocker arm 25 (as shown in fig 3) is a link 30, connected via transmission levers 31 to a rod 32 positioned in such a manner as to rise vertically whenever a foot 33 attached to its bottom end is struck by the neck of a bottle 10 occupying the area at which the moving and fixed tracks 16a and 16b align with one another.

This upward movement of the rod 32 causes a plate denoted 34 to be distanced from a corresponding proximity sensor 35, of which the function is to verify the presence or absence of the bottle 10.

Referring to figs 6, 7 and 8, and to the device aforementioned which serves to arrest the bottles entering the duct 17 from the corresponding length of fixed track 16b, this comprises a pneumatic cylinder 35 of which the rod 38 interacts with two rollers 36 mounted to the ends of two mutually opposed arms 37 urged against the rod 38 by means of respective springs 39. The at-rest position of the arms 37 is adjusted by means of setscrews 40.

Each of the arms 37 affords support by way of a relative shaft 46 to a contoured flap 41 and to a restraint 47, of which the purpose is to block the fixed track 16b and thus prevent the passage of bottles to the track 16a currently in position beneath the duct 17, according to given operating situations that will be described in due course.

The various components constituting the arrester device, i.e. arms 37 and rollers 36, flaps 41 and restraints 47, shafts 46, springs 39, setscrews 40 and the pneumatic cylinder 35, are all mounted to a plate denoted 42.

An additional arrester device (not illustrated) positioned at the remaining end of the track 16a, similar to that described above or at all events of conventional embodiment, serves in like manner to prevent the bottles from unloading when necessary.

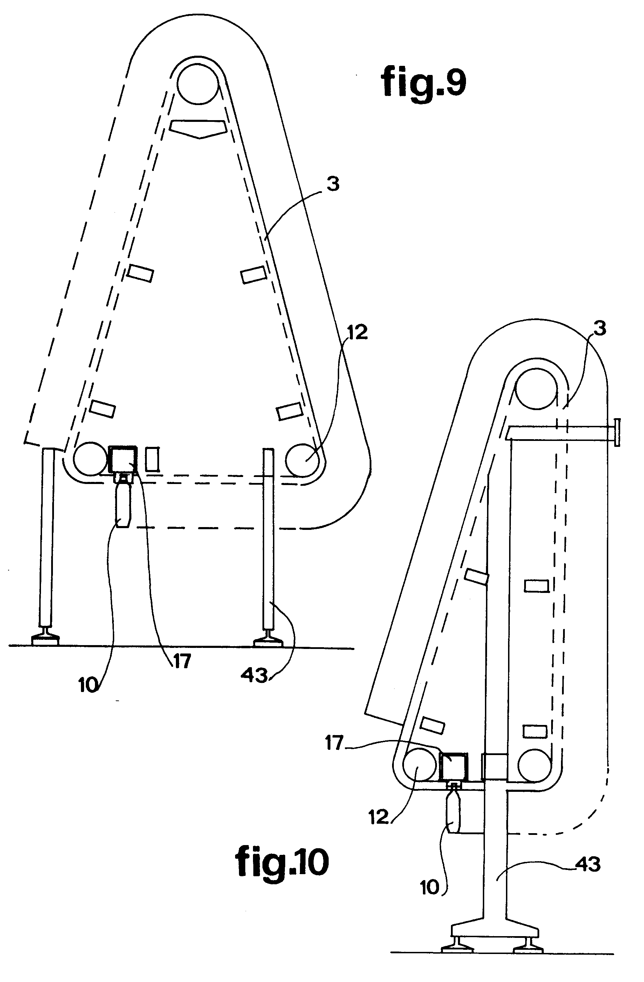

Figs 9 and 10 illustrate two possible variations in embodiment and installation of the storage device, which differ in layout from the essentially 'flat' design described thus far.

That of fig 9 in particular exhibits an 'upright' triangular configuration substantially of isosceles geometry, supported by a frame 43 and with each chain 3 looped around three sprockets 12, whilst that of fig 10 is designed for installation against a wall and exhibits substantially a right angled triangular profile, with each chain 3 again looped around three sprockets 12 and one branch of the chain disposed parallel to the wall.

A device according to the invention can be embodied to modular design principles and is able to afford high storage capacity; loading, unloading or normal transit of the bottles can be brought about by a single fan unit at the entry to the duct 17, and drive systems are limited to just one geared motor that operates simply to index the tracks carrying the ranks of bottles, thereby achieving a notable saving in energy and in installation and servicing costs, compared to the devices currently in use.

An additional benefit, deriving directly from the reduced number of fan units, is reflected in noise levels much lower than those commonly experienced where batteries of fans are in operation.

Further advantages of the device according to the invention stem from the combination of more compact dimensions, high storage capacity and flexibility of installation.

Notwithstanding reference is made specifically to bottles moulded in PET or PVC in the foregoing description, the device according to the invention might be adapted to operate with any given style of container, preferably of plastics material, such as can be suspended and handled by way of a projection issuing from the neck.

In operation of the device, with the bottling line functioning normally, i.e. with substantially equal rates of output from the blow-moulding machine and the filling machine, the bottles pass along beneath the duct 17 of the device as if along any ordinary air conveyor, flowing uniformly or otherwise but without accumulating.

The flow of bottles must be sufficient to satisfy the demand of the filling machine, and accordingly, a count is made of the bottles running into and out of the device by means of photocells 19a and 19b installed on the fixed tracks 16b respectively preceding and following the track 16a in position beneath the duct 17; thus, a tally can be kept of the number of bottles 10 occupying the track 16a at any given moment, utilizing an electronic counter updated by addition from the first photocell 19a and by subtraction from the second 19b.

In the event that operation of the filling machine should be suspended for any reason, a sensor will be activated to trigger the arrester device located at the exit end of the track 16a.

Thereupon, the track 16a begins to fill, and will continue accumulating bottles until the electronic counter registers a prescribed number dependent upon the length of the track and the diameter of the bottle in production. The counter then emits an electrical control signal to operate the arrester device at the entry end of the channel 17 and the tracks 16 will index one step, corresponding to the length of three links of the chain 3 and to one revolution of the geared motor output shaft.

The track 16a filled with bottles thus moves away and its place beneath the duct 17 is taken by an empty track, whereupon the procedure thus described is repeated as long as there are empty tracks 16 available.

In the event of a stoppage at the blow-moulding machine, on the other hand, bottles will begin to discharge from the device in order to maintain the supply to the filling machine.

The track 16a empties, and with reduction of the electronic count to zero, the arrester device at the entry to the duct 17 is activated and further ranks of bottles begin to unload, the procedure from this point being substantially the reverse of that described above in respect of a stoppage at the filling machine; unloading continues until such time as the blow-moulding machine resumes normal operation or until the device is completely empty.

In view of the fact that the blow-moulding machine must continue operating even following a break in the supply of parisons, to ensure that the bottles still forming can run out without mishap, a further photocell 50 is installed preceding the last four or five empty tracks of the device, which can be used to perform two control functions. In the case of normal operation, the signal emitted by the photocell can be used to step up the output of the filling machine in relation to that of the blow-moulding machine so as to deplete the contents of the storage facility down to a level determined by a further minimum limit photocell wich serves to restore the normal tempo of the filling machine.

In the event of a shortage of parisons, the signal can be used to prevent the device from filling up completely in such a way that a number of reserve tracks will always remain available to accommodate bottles still forming in the blow-moulding machine.

A numerical display may also be installed to the end of providing personnel with a continuously updated visual indication of the number of bottles held in temporary storage.

In an alternative embodiment of the invention (not illustrated), the maltese cross mechanism might be replaced to equally good effect, for example, with a speed reducer and stepping motor controlled by an encoder, or with a pneumatically controlled two-way ratchet mechanism.

A temporary storage device thus embodied is easily and automatically cleaned by means of a system of pipes (not illustrated) installed parallel to the tracks between the chains and carrying nozzles from which a liquid containing detergent and bactericide is directed onto the tracks.

The soiled liquid will be collected in a vessel positioned beneath the device, and disposed of or recycled as appropriate.

## Claims

1. A temporary in-line storage device, suitable in particular for containers moulded in PET or PVC, comprising:
- a conveyor equipped with a duct (17) along which the containers (10) pass in transit and in the vicinity of which the containers are also loaded into and/or unloaded from the device;
- a plurality of mutually parallel and equispaced movable tracks (16) by way of which the containers can be accumulated and released in corresponding ranks;
- means by which to move the tracks (16) in such a way as the containers (10) can be taken up or released in ranks or conveyed freely through the device,
- each track (16a) being a portion of the conveyor when the track (16a) is positioned beneath and in exact alignment with the duct (17),
each track (16a) being a mobile storage location or a storage track (16) for the containers (10), when the track (16a) is shifted in positions not in alignment with the duct (17)
characterized
in that the conveyor is a pneumatic conveyor which comprises: an inlet port (18b) and an outlet part disposed in fixed position, and an intermediate part (16a) which constitutes each of said movable tracks and each track (16a) is shaped in such a way as to become a mobile pneumatic conveyor for the containers (10), which are suspended from the track and handled by way of a collar (9) associated with the neck.

2. A device as in claim 1, wherein means by which to invest the tracks (16) with movement comprise:
- a tubular shaft (1) power driven by way of a maltese cross or similar mechanism and carrying sprockets (12), and a freely revolving tubular shaft (2) carrying further corresponding sprockets;
- chains (3) looped around the shafts, in mesh with the relative sprockets (12) and capable of movement in either direction, of which the axes (13) of movement are disposed mutually parallel;
- a plurality of brackets (5) carried at regular intervals by the chains (3) and comprising upper arms (6) and lower arms (7);
- a plurality of longitudinal angle members (8) secured in convergent pairs to the lower arms (7) of the brackets (5) in such a way as to afford tracks (16) from which to suspend a container (10) by the collar (9), anchored at points along their length to each chain (3) and supported transversely by guides (44) slidably accommodating the upper arms (6) of the brackets.

3. A device as in claim 1, wherein the tracks (16) are disposed mutually parallel at equal distance one from the next, and capable of indexed movement parallel with their own axes in either direction, according to the drection of movement of the chains (3), through steps equal in length to the distance between centres of two successive tracks.

4. A device as in claim 1, comprising a plurality of pipes extending parallel with the tracks (16) in the space encompassed by the chains (3) and fitted with nozzles from which to direct a detergent and bactericidal liquid at the tracks, and a vessel positioned beneath the device in which to collect the liquid.

5. A device as in claim 1, comprising a fan unit (18) by which air is forced through the duct (17), and a butterfly mechanism (20) by which the flow of air in the duct can be blocked with the fan unit in operation.

6. A device as in claim 5, wherein the butterfly mechanism comprises a baffle (21) operated through mechanical linkages by the movement of a cam (22) rigidly associated with the shaft (23) of a maltese cross mechanism, and capable of assuming a closed position, whereby the duct (17) is blocked prior to an indexing movement of the tracks (16) in such a way as to ensure that the movement of the bottles (10) will not be obstructed by a flow of air from the duct as the tracks are indexed, and an open position assumed with the tracks (16) at standstill and one track (16a) aligned axially beneath the duct (17), in which the baffle (21) is disposed along the axis of the duct (17) and the flow of air admitted.

7. A device as in claim 1, wherein the number of containers (10) entering and leaving the track (16a) positioned beneath and in alignment with the duct is monitored by means of two photocells (19a, 19b) respectively preceding and following the track (16a), in such a way that the number of containers occupying the track at any given moment can be indicated by an electronic counter connected to the photocells.

8. A device as in claim 1, comprising means located at the entry end of the duct (17) by which to arrest the containers, consisting in contoured flaps (41) and restraints (47) caused to operate through the rotation of shafts (46) associated with arms (37) that are engaged by the rod (38) of a pneumatic cylinder (35).

9. A device as in claim 1, wherein the conveyor, the tracks affording a mobile storage location and the means by which the tracks are set in motion are carried by a frame (43) and arranged in an "upright" triangular configuration.

10. A device as in claim 2 and 9, wherein each chain (3) is looped around three sprockets (12).

11. A device as in claim 1, comprising a proximity sensor (35) serving to verify the presence or absence of a container (10) at the junction between the track (16a) positioned beneath and in alignment with the duct (17) and a fixed track (16b) located preceding the duct, activated by the movement of a plate (34) rigidly associated with a rod (32) of which the bottom end carries a foot (33) positioned to strike against the topmost extremity of the container.

12. A device as in claim 1, wherein the storage device is realized in an upright configuration supported by a frame (43).

## Patentansprüche

1. Eine Einrichtung zum zeitlichen Speichern von insbesondere aus PET oder PVC geformten Behältern, die umfasst:
- Einen Förderer mit einer Röhrenleitung (17), entlang der die Behälter (10) laufen und in deren Nähe die Behälter ebenfalls in die Vorrichtung geladen und/oder aus der Vorrichtung ausgeladen werden;
eine Vielzahl von miteinander parallelen und gleichförmig beweglichen Schienen (16), durch die die Behälter akkumuliert und ausgegeben werden können;
eine Vorrichtung, durch die die Schienen (16) derart bewegt werden können, daß die Behälter (10) aufgenommen, ausgegeben oder frei durch die Vorrichtung durchgelassen werden können;
- wobei jede Schiene (16a) einen Teil eines Förderers bildet, wenn die Schiene (16a) sich exakt ausgerichtet neben der Röhrenleitung (17) befindet;
- wobei jede Schiene (16a) eine bewegliche Einrichtung zum zeitlichen Speichern oder eine Speicherschiene (16) für Behälter (10), darstellt, wenn die Schiene (16a) sich in nicht mit der Röhrenleitung (17) ausgerichteten Positionen befindet;
gekennzeichnet dadurch, daß der Förderer ein pneumatischer Förderer ist, der umfasst:
Einen Eingangsteil (18b) und einen Ausgangsteil mit festen Positionen sowie einen mittleren Teil (16a), der aus den genannten beweglichen Schienen gebildet wird, und wobei jede Schiene (16a) derart geformt ist, daß sie einen pneumatischen Förderer für Behälter (10) bildet, die mit dem Kragen (9) am Hals auf den Schienen hängend befördert werden.

2. Eine Einrichtung gemäß Anspruch 1, wobei die Vorrichtung zur Bewegung der Schienen (16) umfasst:
- Einen durch einen Malteserkreuzmechanismus oder einen ähnlichen Mechanismus angetriebenen Rohrschaft (1), der Zähne (12) und einen frei drehenden Rohrschaft (2) trägt, der weitere Zähne trägt;
- Ketten (3), die um die Schäfte geführt sind, in die entsprechende Zähne (12) eingreifen und die zu Bewegungen in beiden Richtungen fähig sind und deren Bewegungsachsen (13) im Wesentlichen parallel sind;
- eine Vielzahl von Trägern (5) die in regelmäßigen Abständen von den Ketten (3) getragen werden und obere Arme (6) und untere Arme (7) aufweisen;
- eine Vielzahl von länglichen Winkelgliedern (8), die an konvergenten Paaren der unteren Arme (7) der Träger (5) so angebracht sind, daß sie Schienen (16) bilden, von denen ein Behälter (10) am Kragen (9) hängt, die in ihrer Länge an jeder Kette (3) verankert sind und quer entlang von Führungen (44) bewegt werden können, auf denen die oberen Armee (6) der Träger gleiten.

3. Eine Einrichtung gemäß Anspruch 1, wobei die Schienen (16) in gleichen Abständen zueinander parallel angeordnet sind und die die parallele Bewegung in die beiden Richtungen ihrer eigenen Achsen gestatten, entsprechend der Bewegungsrichtung der Ketten (3) mit Schritten, die dem Abstand der Mitte der aufeinander folgenden Schienen entsprechen.

4. Eine Einrichtung gemäß Anspruch 1, die eine Vielzahl von Rohren aufweist, die sich parallel zu den Schienen (16) in dem von den Ketten (3) eingenommenen Raum erstrecken und die mit Blasdüsen verbunden sind, aus denen ein flüssiges Reinigungsmittel und Bakterizid gegen die Schienen geleitet wird, und einen Behälter neben der Vorrichtung zuum Auffangen der Flüssigkeit.

5. Eine Einrichtung gemäß Anspruch 1, die eine Gebläseeinheit (18), von der Druckluft durch die Röhrenleitung (17) geblasen wird, und einen Ventilklappenmechanismus (20) aufweist, mit dem der Luftstrom in der Röhrenleitung bei laufender Gebläseeinheit abgesperrt werden kann.

6. Eine Einrichtung gemäß Anspruch 5, wobei der Ventilklappenmechanismus eine Drossel (21) aufweist, die durch eine mechanische Verbindung mit einer fest an einem Schaft (23) eines Malteserkreuzmechanismus angebrachten Nocke bewegt wird und die dazu in der Lage ist, eine geschlossene Position einzunehmen, bei der die Röhrenleitung (17) zur Bewegung der Schienen derart gesperrt ist, daß gewährleistet wird, daß die Bewegung der Flaschen (10) während der Ausrichtung der Schienen durch den Luftstrom nicht behindert wird, und die außerdem in der Lage ist, eine offene Position einzunehmen, bei der die Schienen (16) stillstehen und eine Schiene (16a) axial neben der Röhrenleitung (17) ausgerichtet ist, wobei die Drossel sich entlang der Achse der Röhrenleitung (17) ausrichtet und den Luftstrom gestattet.

7. Eine Einrichtung gemäß Anspruch 1, wobei die Anzahl der Behälter (10), die in die neben der Röhrenleitung ausgerichteten Schiene (16a) eintreten und aus ihr austreten, von zwei Fotozellen (19a) und (19b) überwacht wird, wobei diese Fotozellen jeweils vor und nach der Schiene (16a) derart angebracht sind, daß die Anzahl zu jedem gegebenen Zeitpunkt von einer an die Fotozellen angeschlossenen elektronischen Zählvorrichtung angezeigt werden kann.

8. Eine Einrichtung gemäß Anspruch 1, die eine Vorrichtung am Eingang der Röhrenleitung (17) aufweist, von der die Behälter angehalten werden und die aus geformten Klappen (41) und Rückhaltevorrichtungen (47) besteht, die durch die Rotation von Schäften (46) betätigt werden, die mit Armen (37) verbunden sind, die wiederum mit dem Stab (38) eines Pneumatikzylinders (35) verbunden sind.

9. Eine Einrichtung gemäß Anspruch 1, wobei der Förderer, die die bewegliche Aufnahmevorrichtung bildenden Schienen und die Vorrichtung, von der die Schienen bewegt werden, von einem Rahmen (43) getragen und in Bewegung gesetzt werden und in einer aufrechten Dreiecks-Konfiguration angeordnet sind.

10. Eine Einrichtung gemäß den Ansprüchen 2 und 9, wobei jede Kette (3) um drei Zähne (12) geführt wird.

11. Eine Einrichtung gemäß Anspruch 1, die einen Abstandsmelder (35) aufweist, der anzeigt, ob Behälter (10) zwischen der neben der Röhrenleitung (17) ausgerichteten Schiene (16a) und der feststehenden Schiene (16b) vor der Röhrenleitung vorhanden sind oder nicht, und der durch die Bewegung einer Platte (34) betätigt wird, die fest mit einem Stab (32) verbunden ist, deren unteres Ende einen Fuß (33) trägt, der so angebracht ist, daß er gegen das obere Ende des Behälters stößt.

12. Eine Einrichtung gemäß Anspruch 1, wobei die Aufnahmevorrichtung aus einer von einem Rahmen (43) getragenen aufrecht stehenden Konstruktion besteht.

## Revendications

1. Un dispositif d'emmagasinage temporaire par rangées , qui convient en particulier pour des bouteilles en PET ou en PVC qui comprend:
- un transporteur équipé d'un conduit (17) le long duquel les récipients (10) passent en transit, et en proximité duquel les récipients sont aussi chargés dans le dispositif ou déchargés de ce dernier;
- une pluralité de voies (16) mobiles, parallèles les unes aux autres et équidistantes, au moyen desquelles les récipients peuvent être accumulés et relâchés en rangées correspondantes;
- des moyens par lesquels déplacer les voies (16) de telle sorte que les récipients (10) puissent être prélevés ou relâchés en rangées ou transportés librement à travers le dispositif,
- chaque voie (16a) étant une portion du transporteur quand la voie (16a) est positionnée au-dessous du conduit (17) et en alignement exact avec ce dernier,
chaque voie (16a) étant un emplacement d'emmagasinage mobile, ou une voie d'emmagasinage (16) pour les récipients (10) quand la voie (16a) est déplacée dans des positions qui ne sont pas en alignement avec le conduit (17),
caractérisé
par le fait que le transporteur est un transporteur pneumatique qui comprend: une partie qui se trouve à l'entrée (16b) et une partie à la sortie, qui sont disposées en position fixe, et une partie intermédiaire (16a) qui constitue chacune desdites voies mobiles, et chaque voie (16a) a une forme telle qu'elle puisse devenir un transporteur pneumatique mobile pour les récipients (10) qui sont suspendus à partir de cette voie et qui sont maniés au moyen d'un collier (9) associé avec le col.

2. Un dispositif comme celui de la revendication 1, dans lequel les moyens par lesquels les voies (16) sont mises en mouvement comprennent:
- un arbre tubulaire (1) qui est propulsé mécaniquement au moyen d'une croix de Malte ou d'un mécanisme similaire et qui porte des dents (12), et un arbre tubulaire qui tourne librement (2) et qui porte d'autres dents correspondantes;
- des chaînes (3) qui sont enroulées autour des arbres, en prise avec les dents (12) relatives et qui peuvent se déplacer dans les deux directions, dont les axes (13) de mouvement sont disposés parallèlement les uns aux autres;
- une pluralité de supports (5) qui sont portés à intervalles réguliers par les chaînes (3) et qui comprennent des bras supérieurs (6) et des bras inférieurs (7);
- une pluralité d'éléments angulaires et longitudinaux (8) fixés en paires convergentes aux bras inférieurs (7) des supports (5) de telle sorte qu'ils offrent des voies (16) d'où l'on peut suspendre un récipient (10) par le collier (9), qui sont ancrés à chaque chaîne (3) à certains points le long de leur longueur et qui sont supportés transversalement par des guides (44) qui reçoivent les bras supérieurs (6) des supports d'une façon telle qu'ils puissent glisser.

3. Un dispositif comme celui de la revendication 1, dans lequel les voies (16) sont disposées parallèlement les unes aux autres à une distance égale l'une de l'autre, et qui sont capables de mouvement de mise en place et parallèles à leurs propres axes dans les deux directions, suivant la direction du mouvement des chaînes (3), par des pas dont la longueur est égale à la distance entre les centres de deux voies successives.

4. Un dispositif comme celui de la revendication 1, qui comprend une pluralité de tuyaux qui s'étendent parallèlement aux voies (16) dans l'espace qui est entouré par les chaînes (3) et qui sont garnis d'ajutages d'où un liquide détergent et bactéricide est dirigé vers les voies, et un récipient positionné au-dessous du dispositif dans lequel est recueilli le liquide.

5. Un dispositif comme celui de la revendication 1, qui comprend un élément de ventilation (18) par lequel l'air est contraint à travers le conduit (17), et un mécanisme de soupape à papillon (20) par lequel le flux d'air dans le conduit peut être bloqué avec l'élément de ventilation en fonction.

6. Un dispositif comme celui de la revendication 5, dans lequel le mécanisme de soupape à papillon comprend un déflecteur (21) actionné à travers des liaisons mécaniques par le mouvement d'une came (22) rigidement associée avec l'arbre (23) d'un mécanisme à croix de Malte, et capable de se mettre en une position fermée, ce qui provoque le blocage du conduit (17) avant un mouvement de mise en place des voies (16) de façon à assurer que le mouvement des bouteilles (10) ne soit pas empêché par un flux d'air provenant du conduit quand les voies sont mises en place, et de se mettre en une position ouverte assumée avec les voies (16) à l'arrêt et une voie (16a) alignée axialement au-dessous du conduit (17), dans laquellle le déflecteur (21) est disposé le long de l'axe du conduit (17) et le flux d'air est laissé entrer.

7. Un dispositif comme celui de la revendication 1, dans lequel le nombre de récipients (10) qui entrent et qui quittent la voie (16a) positionnée au-dessous du conduit et en alignement avec ce dernier est contrôlé au moyen de deux photocellules (19a, 19b), l'une précédant la voie (16a) et l'autre la suivant, de telle sorte que le nombre de récipients qui occupent la voie à n'importe quel moment puisse être indiqué par un compteur électronique connecté aux photocellules.

8. Un dispositif comme celui de la revendication 1, qui comprend des moyens logés à l'extrémité qui se trouve à l'entrée du conduit (17) par lesquels arrêter les récipients, consistant en des volets courbés (41) et en des encastrements (47) poussés à fonctionner par la rotation d'arbres (46) associés avec des bras (37) qui sont embrayés par la tige (38) d'un cylindre pneumatique (35).

9. Un dispositif comme celui de la revendication 1, dans lequel le transporteur, les voies qui offrent un emplacement mobile pour l'emmagasinage et les moyens par lesquels les voies sont mises en mouvement sont portés par une structure (43) et sont disposés en une configuration triangulaire "verticale".

10. Un dispositif comme ceux des revendications 2 et 9, dans lequel chaque chaîne (3) est enroulée autour de trois dents (12).

11. Un dispositif comme celui de la revendication 1, qui comprend un détecteur en proximité (35) servant à vérifier la présence ou l'absence d'un récipient (10) à la jonction entre la voie (16a) positionnée au-dessous du conduit (17) et en alignement avec ce dernier, et une voie fixe (16b) placée avant le conduit, actionné par le mouvement d'une plaque (34) rigidement associée avec une tige (32) dont l'extrémité inférieure porte un pied (33) positionné pour heurter contre l'extrémité supérieure du récipient.

12. Un dispositif comme celui de la revendication 1, dans lequel le dispositif d'emmagasinage est réalisé en une configuration verticale supportée par une structure (43).
